# EUROPEAN PATENT SPECIFICATION

(11) **EP 0 601 666 B1**
(45) Date of publication and mention of the grant of the patent: **21.04.1999**
(21) Application number: 93203428.3
(22) Date of filing: 07.12.1993
(51) Int. Cl.: H04N 9/31

(54) **Colour sequential light valve display device**
Sequentielle Lichtventil-Farbanzeigevorrichtung
Dispositif d'affichage séquentiel couleur à valve optique

(30) Priority: 09.12.1992 US 990776
(43) Date of publication of application: 15.06.1994
(73) Proprietor: Koninklijke Philips Electronics N.V., 5621 BA Eindhoven (NL)
(72) Inventor: Janssen, Peter, c/o INT. OCTROOIBUREAU B.V., NL-5656 AA Eindhoven (NL)
(74) Representative: Cobben, Louis Marie Hubert

(56) References cited:
- EP-A- 0 492 721

## Description

This invention relates to a colour display device comprising light valve means, an illumination system providing sequentially scanned bands of different colours, a single light valve, an optical system for directing said sequentially scanned bands of different colours across the surface of said light valve, an electronic light valve driving circuit for addressing each light valve portion illuminated by a colour band so that the said portion provides image information of the colour of said colour band and modulates said band with said information, the illumination system comprises a source of white light, a colour-selective subsystem for splitting said white light into red, green and blue bands and means for scanning said bands of red, green and blue sequentially.

Such a device is known from EP-A 0 492 721.

Projection television (PTV) and video colour display systems, especially rear projection display systems, are a popular way to produce large screen displays, i.e. picture diagonal of 40 inches or greater, as the projection method provides displays which are lighter, cheaper, and in may cases, superior in brightness and contrast, than non-projection based displays. Direct view cathode ray tube (CRT) based systems still dominate non-projection display technology, especially for, 9 inch to 30 inch colour displays. In unit and dollar volume, the major market for all such displays is the consumer market. Size, cost, brightness, contrast and to a lesser extent, resolution are important characteristics of consumer designs. Because large direct view CRT based displays are heavier, bulkier, and more expensive, projection consumer displays dominate in sizes over forty inches.

Consumer projection technology has been dominated by a system employing three small monochrome type CRTs, one each for the red, green and blue portions of the image, and three projection lenses. These systems employ complex electronic circuits to distort the rasters of the images on at least two of the CRTs so that the composite projection image is converged. Effecting the proper adjustment of the electronics to obtain the converged image is a time consuming, tedious process. Further maintaining the quality of the convergence in the system after it has been set up at the factory remains an issue.

CRT based projection systems require a stable, source of high voltage, with the attendant requirement of giving careful attention to avoiding excess X-ray generation. The CRTs and projection lenses are not inexpensive components, so the requirement of using three of each add substantially to the cost of the systems. In three CRT-three lens PTV systems, there is also a tendency for the image to change colour depending on the horizontal viewing angle -- a phenomenon called "colour shift". Colour shift can be partially controlled by using special projection screen designs. These designs require meeting difficult production tolerances for screen registration and thickness. If not for the requirement of controlling colour shift, it would be much easier to design and produce projection screens to provide optimal distribution of light.

With a view toward the advantages of projection systems over direct view, but also some disadvantages, which were just detailed, engineers have been seeking alternative means of designing projection display systems. Accordingly, patents have issued and products have been produced employing three, matrix addressed, small light valve panels, most commonly TFT (thin film transistors) array LCD panels, instead of CRTs. These systems require only a single projection lens, if the light from three LCD panels are combined via the use of dichroic filters, a.k.a. dichroic mirrors. Convergence of the images is obtained by precision adjustment of the alignment of two of the panels. Initial interest in such displays has been their compactness when employed for front projection, and excellent contrast. These LCD panels are costly components, and consequently these LCD projectors cost more than CRT based projectors.

Also known are "single panel" designs which employ special light valve panels in which separate sub-pixels are used to modulate respective primary colours. Such colour panel technologies have three limitations: firstly, the requirement for sub-pixels limits the effective image resolution. Secondly, white light falls on each of the sub-pixels, but only the colour of the light for which the sub-pixel is designed is usable -- the remainder is wasted. Thus a two-thirds loss of efficiency results. A further loss in efficiency is caused by the reduced effective aperture of the panel for a given polychrome resolution capability -- because of the presence of the sub-pixels with attendant masks and traces. Thirdly, state of the art panel resolution is lower, or the panel cost is higher, because of using sub-pixels.

The European Patent Application 0 492 721 discloses a single panel colour display device which does not have the above limitations. This device comprises an illumination system providing sequentially scanned bands of different colours, a single light valve, an optical system for directing said sequentially scanned bands of different colours across the surface of said light valve, and an electronic light valve driving circuit for addressing each light valve portion illuminated by a colour band so that the said portion provides image information of the colour of said colour band and modulates said band with said information.

In the illumination system, light from an intense white light source, for example an arc lamp, is collected, and separated using dichroic filters into primary colours -- red, green and blue. The colour separated light is caused to be formed into three sources, arrayed adjacently, such that each source appears to be narrow in the "vertical" direction and wider in the "horizontal" direction. Scanning optics are employed to cause three bands of light, one of each of the colours, to be positioned onto the rear of a transmissive light valve panel. This panel may be a twisted nematic LCD panel with TFT addressing or other types of light valves. The scanning optics cause the bands of illumination to move across the LCD panel. As a band passes over the "top" of the active area of the panel a band of light of that colour again appears at the "bottom" of the panel. Accordingly, there is a continuous sweep of three colours across the panel.

Prior to each colour passing over a given row of pixels on the panel, that row will have been addressed with the appropriate information for that colour. This means that each row of the panel will be addressed three times for each video field which is to be displayed. This can be accomplished by either using extra addressing lines to the panel array, and writing the horizontal rows in parallel, or by writing three separated rows sequentially, but at three times the field rate. The information being written to the separated rows must be appropriate for the colour content of that portion of the image which is being displayed.

Light from the LCD panel is projected by a colour corrected projection lens. Alternatively the invention could be used in a direct view mode. Conventional projection screens are useable with this system. In the case or rear projection systems, screen designs which do not correct for "colour shift" are now useable.

The simultaneous use of a large portion of the available red, green and blue light through a single light valve panel is an important feature of the device of EP-A 0 492 721. Its optical efficiency is at least comparable to that of three panel systems employing the same panel technology. Using only a single panel eliminates the need to mechanically converge the image, and further reduces system cost. Additionally, beam combining dichroic filters are not needed which leads to further cost savings.

The colour band scanning system described above uses a four-sided prism of relatively high refractive index glass. However, a glass prism of sufficient size for this application is relatively heavy, and has a large amount of rotational inertia, thus requiring a relatively powerful motor to rotate it.

Moreover the different colour bands have different positions relative to the prism. This action may cause colour overlap or too large a gap between adjacent colours. This may impede colour purity since it is difficult to compensate for this non-uniformity and address the light valve appropriately.

It is the object of the present invention to provide a colour band scanning system having an identical scan for each of the colours across the light valve, thus maintaining colour purity.

To that end the device according to invention is characterized in that said means for scanning comprise first, second and third prisms disposed coaxially with one another, each of said prisms being disposed offset at a 30° angle of rotation from one another; and
means for rotating said first, second and third prisms.

The device according to invention is defined in claim 1.

For better understanding of the invention, reference is made to the drawings which are to be taken in conjunction with the detailed specification to follow:
Fig. 1 is a side view of the optical system of the single panel colour band scanning projection display;
fig. 2 is a side perspective view of the colour separation and scanning mechanism of this system;
Fig. 3 is a diagram of the drivers of the light valve;
Fig. 4 is a diagram of the processing of the video signals for driving the light valve; and
Figs. 5 and 6 are side and front views respectively of a system according to the invention which provides improved scan uniformity;
Fig. 7 is a top view of the scanning system of Figs. 5 and 6 and shows the input system of dichroic mirrors and the output correction lenses,
Figs. 8 and 9 are sectional view of alternate embodiments of scanning prisms; and
Fig. 10 is a plot of scanning errors for four, six and eight sided prisms.

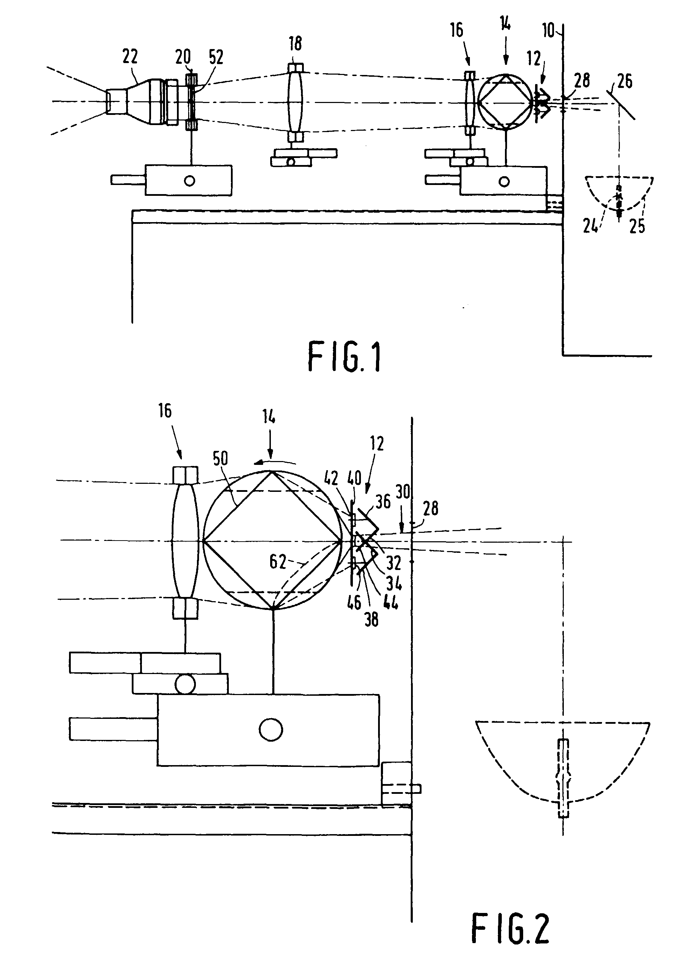

Figure 1 is a generalized overview of the optical system of an embodiment of the single panel colour projection video display according to EP-A 0 492 721 which includes a light box 10, a system of dichroic mirrors 12 for splitting the light into bands of red, green and blue, a rotating prism 14 for scanning the RGB bands, relay lenses 16, 18 a light valve 20 upon which is impressed the video signals and a projection lens 22. Light box 10 includes a lamp 24 of any suitable high intensity type such as a xenon arc lamp and on ellipsoidal reflector 25. The lamp output is directed to a "cold" mirror 26 which serves to reflect light in the visible spectrum while passing infra red light. Mirror 26 reflects the light from lamp 24 at a 90° angle and directs it to a series of optical lenses (not shown) which serve to modify the beam of light so that it is in the form of a generally uniform rectangular beam which exits light box 10 through an opening 28. Light box 10 may also include elements for absorbing ultraviolet radiation and cooling lamp 24. Lamp 24 has preferably a short arc length which facilitates its imaging and thus increases the brightness.

As is shown in detail in Figure 2 the beam of light 30 emerging from opening 28 of light box 10 is directed to dichroic mirror system 12. Dichroic mirror system 12 serves to split beam 30 into separate beams of red, green and blue. Dichroic mirror system 12 includes centrally disposed crossed dichroic mirrors 32, 34, which pass only the green light component of beam 30 and reflect red upwardly and blue downwardly to mirrors 36, 38. An upper mirror 36 (which may also be dichroic) is constructed and arranged to reflect the red component of the light impinging thereon and the lower mirror 38 reflects only the blue component of the light impinging thereon. Accordingly, the system of mirrors 32, 34, 36 and 38 serves to split beam 30 into its red, green and blue components which are arranged in the form of a vertical array. A vertical aperture plate 40 includes 3 vertically disposed rectangular apertures 42, 44, 46 which also serve to rectangularize the three RGB light beams exiting the apertures with the red beam on top, the green beam in the middle and the blue beam on the bottom.

After leaving aperture plate 40 the red, green and blue beams impinge upon an optical scanning mechanism in the form of a rotating prism assembly 14. Prism assembly 14 includes a prism member 50 which has for example four equal flat sides (i.e. its cross section is square) and is rotated about its central longitudinal axis by a motor (not shown) which is driven in synchronicity with the video signals to light valve 20. The action of rotating prism member 50 is to cause the red, green and blue band of colours to be scanned downwardly (or upwardly) in a sequential manner by refraction. The sequentially scanned RGB bands are directed toward light valve 20 by relay lenses 16, 18. Lenses 16 and 18 constitute an anamorphic imaging system (of a 4 x 1 ratio) which images the light from apertures 42, 44, 46 onto light valve 20. As such, the rectangular active surface of light valve 20, which is a transmission LCD, receives sequential scanning of red, green and blue rectangular colour bands. LCD panel 52 modulates the light impinging thereon in accordance with the desired input video information for the colours impinging on its various portions thereon. Thereafter, the video modulated sequential bands of light are projected upon a suitable viewing surface, such as a projection screen, by means of projection lens assembly 22.

The scan linearity of the optical system can be improved to a significant degree by making the surfaces of the revolving prism cylindrically concave as shown in the dotted surface 62 in Figure 2. The preferred radius of curvature is on the order of 10 inches when the length between adjacent optical facets of the prism is 2.4 inches. For maximum projector performance the use of concave faces is preferred. Negative cylindrical faces can be achieved by direct fabrication (grinding), or by cementing plano-concave cylindrical lenses onto the four faces of a conventional prism. The refractive index of such facing lenses need not be unusually high, but the refractive index of the bulk of the prism should be high (N > 1.6). If the refractive index is too low, then rays that otherwise would pass into one facet would exit through an adjacent facet. If this occurs, the phenomenon of total internal reflection (TIR) happens, and the final direction of the existing ray will not be in the proper direction for the light to be useful.

In the electronics for the device, separate red (R), green (G) and blue (B) signals are derived from the appropriate input source (broadcast, cable, direct) as is well known to those skilled in the art. However, in order to drive light valve 20 in accordance with the sequential colour bands certain video signal processing is necessary. The parallel RGB signals must be serialized to a serial stream with, for example, the green signal delayed one third of a video field behind the red signal and the blue signal delayed one third of a video field behind the green signal. Thereafter, this serial stream must be processed to conform to the column driver and geometrical arrangement of light valve 20. For example if there are four column drivers there must be four parallel video signals. This signal processing utilizes the drivers of the light valve in a different manner than usually utilized for driving LCD displays. However, the same number and type of drivers are used so that the topology of the light valve need not be radically changed from that used with conventional video displays.

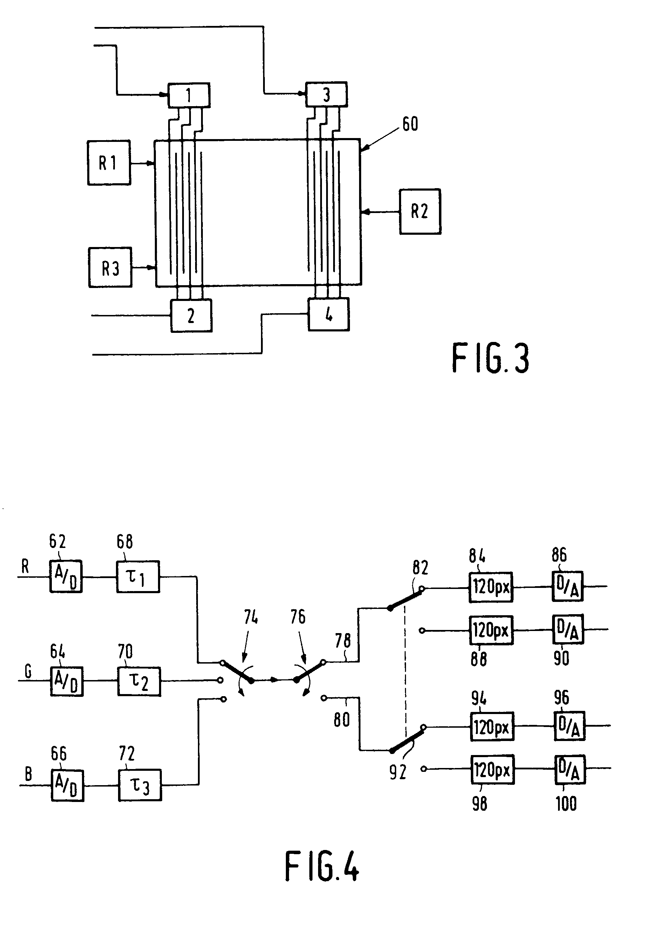

Figure 3 is a generalized representation of the row and column drivers on a thin film transistor (TFT) LCD array which may be used in accordance with the invention. As is known in this art in such displays the rows are addressed sequentially with all of the TFTs in one row being turned on simultaneously through a common gate line by one of the row drivers R1, R2, R3. The individual pixels in a row are driven by a series of column drivers which may be arranged as illustrated in Figure 3. The LCD array is layed out such that drivers 1 and 3 are connected to the pixels in odd-numbered columns while drivers 2 and 4 are connected to the pixels in even-numbered columns. The column drivers, which are basically memory devices, sample the incoming video signal and store the sampled value in the respective memory cell.

In standard monochrome operation the column drivers would be loaded in a sequential fashion: during the first half of the video line driver 1 receives all odd pixel values while driver 2 receives all even pixel values. Drivers 3 and 4 store the respective values during the second half of the line. After the video line has been completely written, the outputs of the driver are enabled while at the same time the according row is activated, resulting in a "dump" of the video information onto a specific pixel row on the panel. The whole LCD array is "reprogrammed" in this fashion once per video frame in the sequence video line 1, 2, 3, 4, ..., 478, 479, 480.

In the present device a different sequence is required with which the LCD array has to be programmed. The three colour bands red, green, and blue are scanning vertically over the panel. During one video frame each row is illuminated by, in this realization, first passing red, then a green and finally a blue lightband. The programming of a particular row has to be performed in a way that e.g. the green values are loaded before the green lightband reaches this row but after the red band has passed by. Since all three colour bands are illuminating the panel at any one time three rows have to be programmed during the time of one regular video line. Since the column driver arrangement does not allow independent programming of more than one row at a time this operation has to be performed sequentially.

In case of equally spaced colour bands which scan in a strictly linear fashion with no overscan present and 450 rows (video lines) per frame the programming of the LCD panel would be performed in the following sequence (R = red, G = green, B = blue, (xx) = row number):
R(1), G(151), B(301), R(2), G(152),
B(302), R(3) ...R(150), G(300), B(450), R(151), G(301), B(1) ...
The programming would track the colour bands as they move over the panel. The numbers also indicate that the red video information lags 150 lines or 1/3 of a frame behind green which in turn lags 1/3 of a frame behind blue.

Figure 4 illustrates the signal processing for the RGB signals in a diagrammatic manner. Each of the signals is input to A/D converters 62, 64 and 66 so that signal processing takes place in digital form. Thereafter the R signal is input to a first delay line 68 which will delay the red signal for a time τ₁. The G signal is input to a delay line 70 which will delay it for a time τ₂ and the blue signal is input to a delay line 72 to delay it a time τ₃. The times τ₁, τ₂ and τ₃ are selected according to the position and scan speed of the respective colour band on the panel. Unless the scanning operation is performed completely linearly these delay times will vary during the course of one video frame, both absolutely and relative to each other.

The signals then pass to a switch 74 which selects each of the outputs of the delay circuits 68, 70, 72 sequentially so that the output of switch 74 is a serial stream with, for example, the pixels of the video lines in the aforementioned sequence. Thereafter as described below the signals are input to switching mechanism for applying the serialized delayed stream to the light valve.

The effective threefold increase of the field rate exceeds the speed capabilities of present column drivers. Additional demultiplexing and buffering is used to program the column drivers with four independent and parallel signals, each of which exhibits a data rate of only one quarter of the total rate.

The video stream passes to a switch 76 to separate the video stream into first and second streams 78, 80. Switch 76 is operated at a speed so as to divide the video stream into halves corresponding to the first and second half of each line. Thereafter the output of switch 76 is connected by a line 78 to a switch 82 which is operated at a speed so as to separate the odd and even pixels. The odd pixels are directed to a buffer memory 84 which will hold in this example 120 pixels (one quarter of one line), thereafter the output of buffer memory 84 is output to a D/A converter 86 whose output is in turn directed to column driver 1 as shown in Figure 3. The even pixel stream is directed to a buffer memory 88 and D/A converter 90 and thereafter to column driver 2 of Figure 3. The second halves of the video lines carried by line 80 are similarly processed by odd/even switch 92 with the odd pixels directed to buffer 94 and D/A converter 96 to column driver 3. Even pixels are directed through buffer 98 and D/A converter 100 to column driver 4.

As is illustrated in Figure 2 the three colours emerge from aperture plate 40, through apertures 42, 44, 46 which are arranged vertically. However, as is seen in Fig. 2 only the middle colour band (green) is located on the rotational axis of scanning prism 14 with the upper (red) and lower (blue) bands off-axis. Due to the vertical arrangement the different colour bands change their position relative to the prism. This action may cause colour overlap or too large a gap between adjacent colours. This may impede colour purity since it is difficult to compensate for this non-uniformity and address the light valve appropriately. The above problems can be avoided by using the scanning system of the present invention which provides an identical scan for each of the colours across the light valve, thus maintaining colour purity.

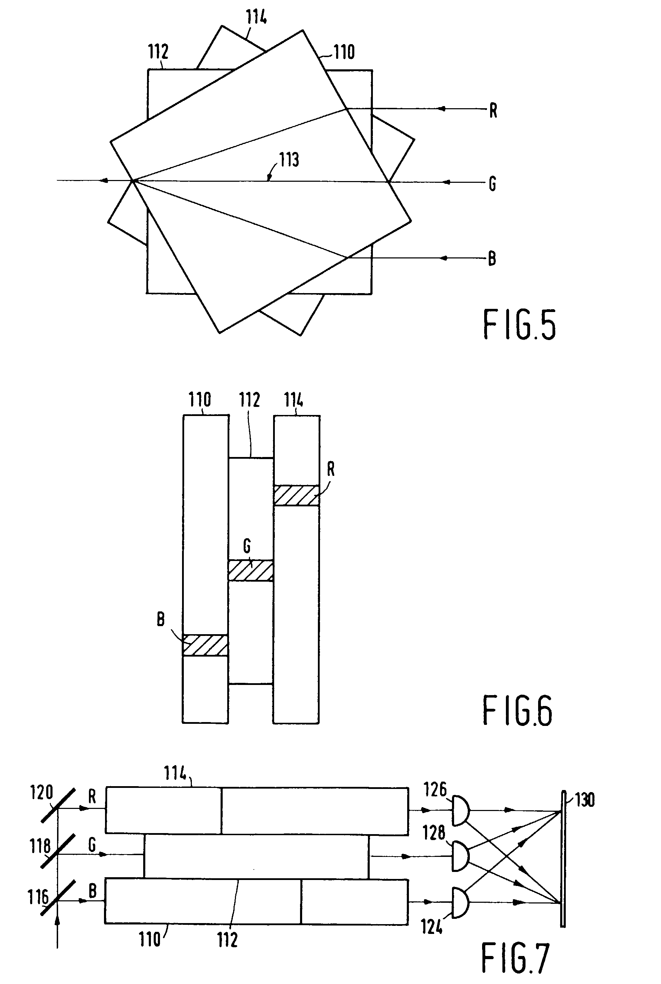

This scanning system is illustrated in Figures 5, 6 and 7. The single four-sided rotating prism 14 has been replaced by three narrower prisms 110, 112 and 114 which are disposed in side by side relationship. Each prism 110, 112, 114 acts only on a single colour and each is coaxially mounted for rotation along rotational axis 113 and shifted 30 degrees with respect to the next prism. As shown in Figure 7 the input white light from the projection lamp is split into three colours by three dichroic mirrors 116, 118 and 120. The incoming white light first impinges upon mirror 116 which is mounted in front of prism 110. Mirror 116 reflects blue light to prism 110 and passes light of other colours. The light passed by mirror 116 next impinges upon mirror 118 which reflects only green light to prism 112. Finally, the light passed by dichroic mirror 118 impinges upon dichroic mirror 120 which reflects only red light to prism 114. Because each prism 110, 112, 114 is 30 degrees ahead of rotational phase with the preceding prism the output light is as is shown in Figure 6 which consists of an upper band of red, a middle band of green and a lower band of blue in a continuing sweep. The arrangement of prisms provides that each of the scans of each of the colours is uniform. Prisms 110, 112, and 114 may be either manufactured individually, made of glass and cemented together or, if made of optical plastic such as PMMA may be moulded as a single unit. These plastics are lighter than glass and are mouldable which permits inexpensive mass production. Furthermore, since such plastics may be moulded more complex shapes can be made than by the traditional grinding and polishing methodology used for optical glass prisms.

As is seen in Figure 6 each of the three colour bands is in a proper "stacked" vertical position but are offset horizontally from each other. In order to maximize the use of the light output each of the colour bands should be aligned horizontally as well. Horizontal alignment is accomplished with the aid of correction lenses 124, 126 and 128 positioned at the output of prisms 110, 112 and 114 respectively. As is shown in Figure 7 the correction lenses 124 and 126 serve to deflect inwardly the outermost beams towards a LCD panel 130 (or transfer optics) with the centermost beam left undeflected (but focused by lens 128). Thus horizontal alignment as well as uniform vertical scanning is accomplished by this arrangement. This maximizes the use of the light and increases the optical efficiency of the system.

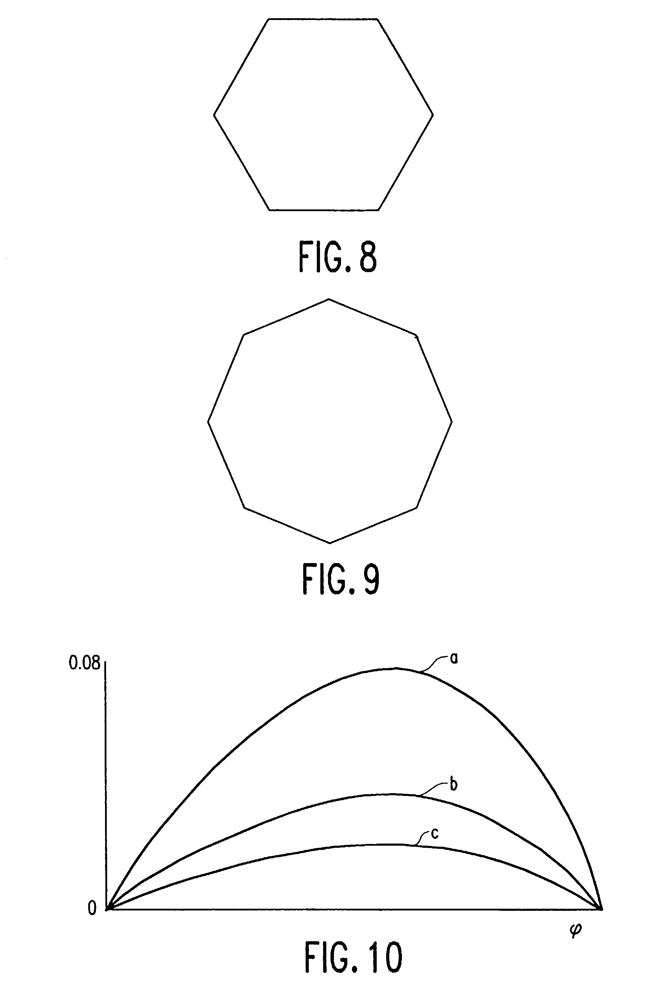

In addition to scan uniformity, linearization of the scan may also be accomplished by the use of scanning prisms having more than four sides, such prisms are shown in Figs. 8 and 9. These may have six sides (Fig. 8) or eight (Fig. 9) sides. As is shown in Figure 10, by the curves a, b, and c for respectively the prisms of Figures 5, 8 and 9, multiple sided prisms reduce the scanning error which begins to approach maximum linearity (perfect linearity would be shown by a completely flat line). In Fig. 10 the vertical axis represents the amount of deviation from linearity (i.e. the top of the graph is 8%), with the horizontal axis representing rotation from the middle (0) to the top of the scan of each prism face (50). The light valve is reprogrammed to accommodate the additional colour bands generated by these prisms. Furthermore, these multiple scanning prisms may also be used in a three prism side by side arrangement for extremely precise scanning of the colour bands across the light valve.

It should be kept in mind that the many other components may be substituted for the above described optical system. Other arrangements of the components which provide sequential red, green and blue bands across the surface of a light valve may be utilized in conjunction with the present invention. For example, rather than a single source of white light, three sources of appropriately coloured red, green and blue light may be utilized in conjunction with a scanning mechanism. Similarly, dichroic mirror system 12 and rotating prism 50 could be replaced by, for example, a rotating wheel of coloured filters or a rotating drum of coloured filters. Dichroic mirror system 12 could be replaced by a refractory prism and rotating prism 50 could be replaced by a multiple sided polygonal mirror system. The scan direction need not be vertical but could also be horizontal or diagonal (with suitable light valve signal processing).

It is also noted that this invention is utilizable with any type of known electronic light valves such as transmission or reflection LCDs, ferroelectric devices, deformable mirrors and the like. Additionally, the light path could be straight as illustrated or folded in a more compact arrangement. The light valve could also be utilized in a direct view system. In certain applications a two colour band rather than three band system could be used. A special requirement of the light valve is that it have sufficient switching speed to be switched at more than three times the standard speed for monochrome LCD panels as each pixel of the LCD is at various points in time a red, a green and a blue pixel. Techniques to speed the response time on a LCD include: heating the panel, low viscosity liquid crystal material, high contrast material and/or making the liquid crystal layer thinner. Any combination of these techniques may be used.

## Claims

1. A colour display device comprising a single light valve (20), an illumination system providing sequentially scanned bands of different colours, an optical system for directing said sequentially scanned bands of different colours across the surface of said light valve, an electronic light valve driving circuit for addressing each light valve portion illuminated by a colour band so that the said portion provides image information of the colour of said colour band and modulates said band with said information, the illumination system comprising a source of white light (10), a colour-selective subsystem (116,118,120) adapted for splitting said white light into red, green and blue bands and means adapted for scanning said bands of red, green and blue sequentially, characterized in that said means adapted for scanning comprise first, second and third prisms (110,112,114) disposed coaxially with one another, each of said prisms being disposed offset at a 30° angle of rotation from one another; and
means for rotating said first, second and third prisms.

2. A device as claimed in Claim 1, wherein said first, second and third prisms each have four sides.

3. A device as claimed in Claim 1 or 2, further including optical means (110,112,114) for horizontally offsetting said beams onto said light valve means.

4. A device as claimed in Claim 1, 2 or 3, characterized in that the colour selective subsystem comprises a system of dichroic mirror (116,118,120).

5. A device as claimed in Claim 1, 2, 3 or 4, characterized in that said light valve means comprise a transmission LCD (130).

6. A device as claimed in Claim 1, 2, 3, 4 or 5 characterized in that said first, second and third prisms comprise optical plastic.

7. A device as claimed in Claim 1, 2, 3, 4, 5 or 6 characterized in that said first, second and third prisms comprise a single moulding.

## Patentansprüche

1. Farbwiedergabeanordnung mit einem einzelnen Lichtventil (20), mit einem Beleuchtungssystem, das sequentiell abgetastete Streifen unterschiedlicher Farbtöne schafft, mit einem optischen System zum Führen der genannten sequentiell abgetasteten Streifen unterschiedlicher Farbtöne über die Oberfläche des genannten Lichtventils, mit einer elektronischen Lichtventiltreiberschaltung zum Adressieren jedes von einem Farbstreifen beleuchteten Lichtventilteils, so daß der genannte Teil Bildinformation des Farbtons des genannten Farbstreifens liefert und dieses Streifen mit der genannten Information moduliert, wobei das Beleuchtungssystem eine Quelle weißen Lichtes(10), ein farbselektives Hilfssystem (116, 118, 120) zum Spalten des genannten weißen Lichtes in rote, grüne und blaue Streifen und Mittel aufweist zum sequentiellen Abtasten der genannten roten, grünen und blauen Streifen, dadurch gekennzeichnet, daß die genannten Mittel zum Abtasten ein erstes, ein zweites und ein drittes Prisma (110, 112, 114) aufweisen, die koaxial zueinander vorgesehen sind, wobei die Prismen je um einen Drehwinkel von 30° gegenüber einander versetzt sind, und Mittel aufweisen zum Drehen des genannten ersten, zweiten und dritten Prismas.

2. Anordnung nach Anspruch 1, wobei das genannte erste, zweite und dritte Prisma je vier Seiten haben.

3. Anordnung nach Anspruch 1 oder 2, weiterhin mit optischen Mitteln (110, 112, 114) zum horizontalen Versetzen der genannten Strahlen gegenüber den genannten Lichtventilmitteln.

4. Anordnung nach Anspruch 1, 2 oder 3, dadurch gekennzeichnet, daß das farbslektive Hilfssystem ein System dichroitischer Spiegel (116, 118, 120) aufweist.

5. Anordnung nach Anspruch 1, 2, 3, oder 4, dadurch gekennzeichnet, daß die genannten Lichtventilmittel ein Transmissions-LCD (130) aufweisen.

6. Anordnung nach Anspruch 1, 2, 3, 4 oder 5, dadurch gekennzeichnet, daß das genannte erste, zweite und dritte Prisma optischen Kunststoff aufweist.

7. Anordnung nach Anspruch 1, 2, 3, 4, 5, oder 6, dadurch gekennzeichnet, daß das genannte erste, zweite und dritte Prisma aus einem einzigen Formelement besteht.

## Revendications

1. Dispositif d'affichage couleur comprenant un panneau d'affichage unique (20), un système d'illumination fournissant des bandes balayées de différentes couleurs, un système optique pour diriger lesdites bandes balayées de différentes couleurs sur l'ensemble de la surface dudit panneau d'affichage, un circuit de commande du panneau d'affichage pour adresser chaque partie dudit panneau illuminée par une bande de couleur, de telle sorte que ladite partie fournisse des informations d'image sur la couleur de ladite bande de couleur et qu'elle module ladite bande avec lesdites informations, le système d'illumination comprenant une source de lumière blanche (10), un sous-système de sélection de couleur (116, 118, 120) propre à diviser ladite lumière blanche en bandes de couleur rouge, verte et bleue et des moyens propres à balayer sans entrelacement des bandes de couleur rouge, verte et bleue, caractérisé en ce que lesdits moyens propres à balayer comprennent des premier, deuxième et troisième prismes (110, 112, 114) disposés de manière coaxiale les uns par rapport aux autres, chacun desdits prismes étant disposé avec un décalage suivant un angle de rotation de 30° les uns par rapport aux autres, et des moyens pour faire tourner lesdits premier, deuxième et troisième prismes.

2. Dispositif suivant la revendication 1, dans lequel lesdits premier, deuxième et troisième prismes possèdent chacun quatre faces.

3. Dispositif suivant la revendication 1 ou 2, comprenant en outre des moyens optiques (110, 112, 114) pour décaler horizontalement lesdits faisceaux sur ledit panneau , d'affichage.

4. Dispositif suivant la revendication 1, 2 ou 3, caractérisé en ce que le sous-système de sélection de couleur comprend un système de miroirs dichroïques (116, 118, 120).

5. Dispositif suivant la revendication 1, 2, 3 ou 4, caractérisé en ce que ledit panneau d'affichage comprend un affichage à cristaux liquides à transmission (130).

6. Dispositif suivant la revendication 1, 2, 3, 4 ou 5, caractérisé en ce que lesdits premier, deuxième et troisième prismes comprennent du plastique optique.

7. Dispositif suivant la revendication 1, 2, 3, 4, 5 ou 6, caractérisé en ce que lesdits premier, deuxième et troisième prismes comprennent un moulage d'un seul tenant.
